# EUROPÄISCHE PATENTSCHRIFT

(11) **EP 1 606 541 B1**
(45) Veröffentlichungstag und Bekanntmachung des Hinweises auf die Patenterteilung: **31.01.2007**
(21) Anmeldenummer: 03785486.6
(22) Anmeldetag: 06.10.2003
(51) Int. Cl.: F16K 15/02

(54) **DRUCKBEGRENZUNGSVENTIL**
PRESSURE-CONTROL VALVE
SOUPAPE DE LIMITATION DE PRESSION

(30) Priorität: 19.03.2003 DE 10312175
(43) Veröffentlichungstag der Anmeldung: 21.12.2005
(73) Patentinhaber: ROBERT BOSCH GMBH, 70442 Stuttgart (DE)
(72) Erfinder: BUCHBERGER, Thomas, A-4020 Linz (AT); WEIXELBERGER, Franz, A-1010 Wien (AT); HOELLER, Wolfgang, A-4656 Kirchham (AT)
(74) Vertreter: Hörschler, Wolfram Johannes
(86) Internationale Anmeldenummer: PCT/DE2003/003300
(87) Internationale Veröffentlichungsnummer: WO 2004/083695

(56) Entgegenhaltungen:
- DE-A- 3 508 986
- DE-A- 19 955 083
- GB-A- 2 116 293
- US-A- 3 339 579
- US-A- 3 346 009
- US-A- 4 456 028

## Beschreibung

### Technisches Gebiet

Die Erfindung bezieht sich auf ein Druckbegrenzungsventil nach dem Oberbegriff des Anspruchs 1.

Ein Druckbegrenzungsventil in Verbindung mit einer Einrichtung zur Einspritzung von Kraftstoff, insbesondere Dieselkraftstoff, ist aus dem Buch "Diesel-engine Management", Stuttgart 1999, Seite 273, bekannt (ISBN 0-7680-0509-4). Ein Druckbegrenzungsventil der genannten Art dient der Druckbegrenzung bei gleichzeitiger Bereitstellung einer Notfahreigenschaft. Vorzugsweise wird ein Druckbegrenzungsventil der genannten Art im Zusammenhang mit Commonrail Systemen eingesetzt.

DE 35 08 986 A1 bezieht sich auf ein Druckbegrenzungsventil, welches insbesondere für den hydraulischen Ausbau im Untertagebergbau und im Tunnelbau eingesetzt wird. Bei diesem Druckbegrenzungsventil ist ein Ventilgehäuse vorgesehen, dessen Eingangsseite und dessen Ausgangsseite durch einen in der Kolbenbohrung verschieblich angeordneten Ventilkolben voneinander getrennt sind. Der Ventilkolben ist über eine auf einem Federteller aufliegende Ventilfeder belastet. Bei Überlast wird die Ventilfeder über den Ventilkolben und den Federteller soweit verschoben, dass das Druckmedium in den Innenraum des Ventilgehäuses gelangt und von dort über eine Durchgangsbohrung abläuft. Der aus DE 35 08 986 A1 bekannte Ventilkolben ist über einen O-Ring abgedichtet.

US 3,339,579 bezieht sich auf ein Ventil zum Verhindern einer Strömung. Durch das Ventil lässt sich eine Bremse derart einstellen, dass sich zunächst innerhalb der Bremse ein einem vorbestimmten Wert entsprechender Druck einstellt.

Es sind bereits in Serienfertigung hergestellte Druckbegrenzungsventile bekannt, bei denen Federteller und Ventilkolben einstückig ausgebildet und zusammen mit einer Druckfeder in einem topfförmigen Ventilträger angeordnet sind. An seinem dem Ventilkolben abgewandten Endstück trägt der Ventilträger eine Verstellschraube mit Kontermutter, über die die Ventilcharakteristik einstellbar ist und auch Fertigungstoleranzen ausgleichbar sind. Abgesehen von der aufwändigen und kostenträchtigen Konstruktion beanspruchen diese bekannten Ventile ein relativ großes Bauvolumen, was ihre Integration in Baugruppen eines Einspritzsystems erschwert. Weiterhin haben diese bekannten Ventile den Nachteil, dass sie nur bis zu einer Pumpenfördermenge von etwa 90 1/h herab regeln. Bei einer niedrigeren Durchflussmenge schließt ein derartiges Druckbegrenzungsventil wieder. Dies hat aber starke Einschränkungen im Notfahrbetrieb zur Folge.

### Darstellung der Erfindung

Das Druckbegrenzungsventil zeichnet sich durch wenige kostengünstig herstellbare Teile aus. Durch die erfindungsgemäß vorgesehene Trennung von Federteller und Kolben ergibt sich die Möglichkeit, den Öffnungsdruck auf einfache Weise einzustellen und Fertigungstoleranzen auszugleichen. Die erfindungsgemäße Lösung bietet weiter insbesondere den Vorteil, dass auch bei einer vergleichsweise niedrigen Pumpendrehzahl und einer geringen Durchflussmenge ein stabiler Notfahrbetrieb ermöglicht wird. Es wird eine von dem Durchfluss nahezu unabhängige Druckkurve bereitgestellt. Das erfindungsgemäß ausgestaltete Druckbegrenzungsventil zeichnet sich weiterhin durch eine sehr geringe Größe aus. Dies ermöglicht den Einbau in Baugruppen des Einspritzsystems, wie beispielsweise Rail oder Pumpe, bei denen nur ein geringer Einbauraum zur Verfügung steht. Durch an dem Kolben des Druckbegrenzungsventils vorgesehene Flachstellen wird ein ausreichender Durchlassquerschnitt für größere Pumpenfördermengen bereitgestellt.

### Zeichnung

Anhand der Zeichnung wird die Erfindung nahestehend näher erläutert.

Es zeigt:
- Figur 1: ein erstes Ausführungsbeispiel eines Druckbegrenzungsventils,
- Figur 2: in einem Diagramm den funktionalen Zusammenhang zwischen Druck und Durchflussmenge bei dem Druckbegrenzungsventil gemäß Figur1,
- Figur 3: ein zweites Ausführungsbeispiel eines Druckbegrenzungsventils mit Flachstellen unterschiedlicher Länge an dem Kolben,
- Figur 4: ein weiteres Ausführungsbeispiel der Erfindung, mit winklig in Bezug auf die Längsachse des Kolbens ausgerichteten Flachstellen,
- Figur 5: ein weiteres Ausführungsbeispiel eines Druckbegrenzungsventils mit einer von einem Kolben belasteten Kugel zum Verschluss der Ventilöffnung,
- Figur 6: ein weiteres Ausführungsbeispiel eines Druckbegrenzungsventils mit einem Kolben ohne Flachstellen,
- Figur 7: ein weiteres Ausführungsbeispiel eines Druckbegrenzungsventils, bei dem der Kolben Flachstellen und Steuerkanten aufweist,
- Figur 8: ein weiteres Ausführungsbeispiel eines Druckbegrenzungsventils, bei dem eine konisch ausgebildete Druckfeder eine mit dem Kolben verbundene Kolbenstange konzentrisch umgibt,
- Figur 9: eine Weiterbildung des in Figur 9 dargestellten Ausfülungsbeispiels, bei dem der Kolben Flachstellen und/oder Steuerkanten aufweist.

### Ausführunesvarianten

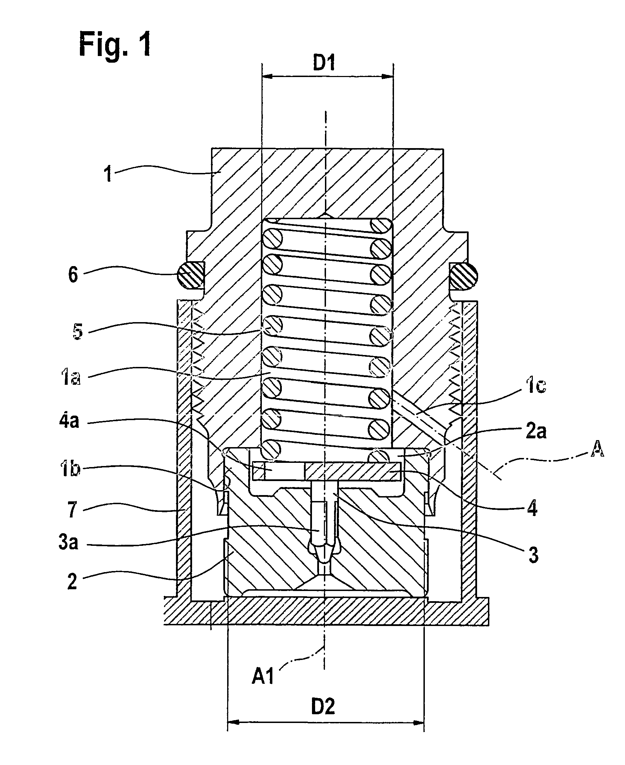

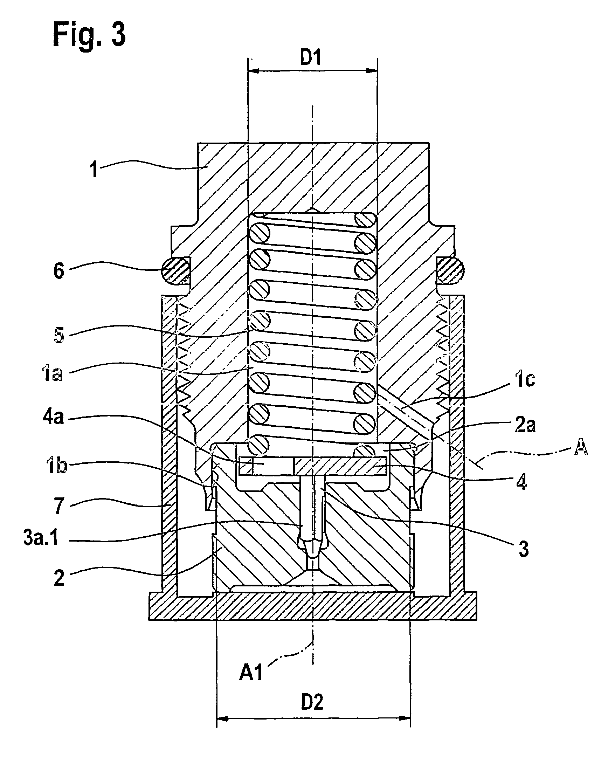

Figur 1 zeigt ein erstes Ausführungsbeispiel eines erfindungsgemäß ausgestalteten Druckbegrenzungsventils, das besonders gut auch für den Notfahrbetrieb geeignet ist. Das Druckbegrenzungsventil 10 umfasst einen Ventilträger 1, der im Wesentlichen topfförmig ausgebildet ist und zwei Teilbereiche 1a, 1b mit unterschiedlichen Innendurchmessern D1, D2 einschließt. Die Teilbereiche 1a, 1b erstrecken sich jeweils über einen Teil der Gesamtlänge des Ventilträgers 1 und gehen stufenförmig ineinander über. Der Teilbereich 1a des Ventilträgers 1 mit dem geringeren Innendurchmesser D1 ist dem Boden des Ventilträgers 1 benachbart. Der Teilbereich 1b des Ventilträgers mit dem größeren Innendurchmesser D2 ist dem Ventileinsatz 2 zugewandt. Der Teilbereich 1a des Ventilträgers 1 dient zur Aufnahme der Druckfeder 5. Der Teilbereich 1b des Ventilträgers 1 umgreift den Ventileinsatz 2 von außen und stellt die Verbindung zwischen den beiden genannten Teilen her. Vorzugsweise ist der Ventileinsatz 2 mit dem Ventilträger verstemmt. Diese Befestigungsart lässt sich in Massenfertigung kostengünstig realisieren und hat sich als hinreichend zuverlässig erwiesen. Als Alternativlösung ist es jedoch auch denkbar den Ventilträger 1 und den Ventileinsatz mit einem geeigneten Gewinde zu versehen und beide Teile miteinander zu verschrauben. Diese Verbindungsart wäre zwar weniger kostengünstig, böte aber andererseits den Vorteil eines weiteren Freiheitsgrads für den Ausgleich von Fertigungstoleranzen. Durch mehr oder weniger starkes Verdrehen der Teile 1,2 könnte nämlich die auf die Druckfeder 5 aufgebrachte Vorspannung variiert werden. In einer zentrisch in dem Ventileinsatz angeordneten Bohrung ist ein Ventilkolben 3 gleitbar gelagert. Zwischen der Druckfeder 5 und dem Ventilkolben 3 ist eine Einstellscheibe derart angeordnet, dass sich die in dem Teilbereich 1a des Ventilträgers ruhende Druckfeder 5 einerseits auf dem Boden des Ventilträgers 1 und andererseits auf der dem Ventilkolben abgewandten Seitentläche der Einstellscheibe 4 abstützt. Die Druckfeder 5 beaufschlagt den Ventilkolben 3 mittelbar über die Einstellscheibe im Schließsinn. Die Einstellscheibe 4 selbst ist in einer in dem Ventileinsatz 2 angeordneten topfförmigen Ausnehmung 2a gleitbar gelagert. Bei einer Öffnungs- oder Schließbewegung des Ventilkolbens 3 wird sie auf- und abbewegt und dabei von der Wand der topfförmigen Ausnehmung 2a geführt. Der durch die unterschiedlichen Durchmesserbereiche (Durchmesser D1, D2) gebildete stufenförmige Übergang des Ventilträgers 1 liegt auf dem Ventileinsatz 2 auf und ragt dabei in Radialrichtung nach innen vor. Dadurch ergibt sich ein Anschlag für die Einstellscheibe 4. Bei einer gegen die Druckfeder 5 wirkenden Druckbelastung des Ventilkolbens 3 kann sich die Einstellscheibe 4 höchstens bis zu diesem Anschlag bewegen und verhindert dadurch auch, dass der Ventilkolben 3 unzulässig weit von seinem Sitz in dem Ventileinsatz 2 abgehoben wird. Die Einstellscheibe 4 weist eine fluiddurchlässige Ausnehmung 4a auf, die vorzugsweise exzentrisch in der Einstellscheibe angeordnet ist, um eine gute Abstützung des Ventilkolbens 3 an der Einstellscheibe 4 zu gewährleisten. Durch diese Ausnehmung 4a kann Kraftstoff in den die Druckfeder 5 beherbergenden Teilbereich 1a des Ventilträgers eintreten, wenn der Ventilkolben 3 von seinem Sitz abgehoben hat. In der Wandung des Ventilträgers 1 ist wenigstens ein Abströmkanal 1c vorgesehen, der zweckmäßig als eine den Teilbereich 1a des Ventilträgers mit seiner Außenmantelfläche verbindende Bohrung ausgeführt ist. Dieser Abströmkanal 1c ist vorzugsweise waagerecht angeordnet (Figur 3). Er kann jedoch, wie in Figur 1 dargestellt, auch schräg verlaufend in die Wandung des Ventilträgers 1 eingebracht sein. Das heißt, die Achse A des Abströmkanals 1c und die Längsachse A1 des Ventilträgers sind winklig zueinander ausgerichtet und zwar vorzugsweise derart, dass zwischen der Achse A und der Längsachsenrichtung des Ventilkolbens 3 ein spitzer Winkel aufgespannt wird. Auf der Außenmantelfläche des Ventilträgers 1 ist noch in einem Sitz liegend ein Dichtungsmittel, vorzugsweise ein O-Ring 6, angeordnet. In Figur ist weiterhin noch eine Schutzkappe 7 eingezeichnet, die das Druckbegrenzungsventil 10 während Lagerung und Transport bis zum Einbau vor Beschädigungen und Verunreinigungen schützt.

Die Druckfeder 5 und der hydraulisch wirksame Sitzdurchmesser, der sich aus der Berührkante des Ventileinsatzes 2 und des Ventilkolbens 3 ergibt, sind derart aufeinander abgestimmt, dass sich ein vorgebbarer Öffnungsdruck P1 ergibt. Besonders vorteilhaft lässt sich dieser Öffnungsdruck P1 durch die Einstellscheibe 4 einstellen. Durch unterschiedlich dicke Einstellscheiben 4 können unvermeidbare Fertigungstoleranzen auf einfache Weise ausgeglichen werden. Die einfach konstruierten Teile des Druckbegrenzungsventils 10 lassen sich kostengünstig fertigen und bevorraten. Der gewünschte Druck für den Notfahrbetrieb wird auf einfache Weise im Zusammenspiel zwischen dem Führungsdurchmesser des Ventilkolbens 3 im Ventileinsatz 2 und dem Durchmesser des Ventilsitzes abgestimmt. Zusätzlich weist der Ventilkolben 3 auf seinem Außenumfang angeordnete Flachstellen 3a auf. In einer besonders vorteilhaften Ausführungsform des Druckbegrenzungsventils 10 sind insgesamt drei Flachstellen 3a vorgesehen, die gleichmäßig auf dem Umfang des Ventilkolbens 3 angeordnet sind. Die Grenzen der Einsetzbarkeit bei großen Durchflussmengen sind durch den Querschnitt dieser Flachstellen 3a bestimmt. Die Federkraft der Druckfeder 5 belastet die Einstellscheibe 4 und damit den Ventilkolben 3 im Schließsinn. Ab einem bestimmten Wert des Drucks reicht die Federkraft der Druckfeder 5 nicht mehr aus, um das Druckbegrenzungsventil 10 geschlossen zu halten. Dieser Wert des Drucks, der so genannte Öffnungsdruck, liegt bei einem Common Rail System der zweiten Generation zwischen etwa 1850 und 1950 bar. Dieser Druckwert ist auf einfache Weise mittels einer entsprechend dimensionierten Einstellscheibe 4 einstellbar. Bei Erreichen des Öffnungsdrucks hebt der Ventilkolben 3 von seinem Sitz in dem Ventileinsatz 2 ab und es baut sich ein Druck in dem von dem Ventilkolben 3 und dem von dem Ventileinsatz 2 umschlossenen Raum auf. Durch die größere hydraulisch wirksame Fläche gleitet der Ventilkolben soweit aus dem Ventileinsatz 2 heraus, dass die an dem Ventilkolben 3 angebrachten Flachstellen 3a wirksam werden und der Kraftstoff über die freien Querschnittsflächen abfließen kann. Über die in den Ventilkolben 3 eingearbeiteten Flachstellen beziehungsweise Steuerkanten wird die Kennlinie für den Notfahrbetrieb eingeregelt. Idealerweise wirde das Druckbegrenzungsventil 10 erst bei einer Durchflussmenge von etwa 15 1/h wieder schließen. Ab dem Zeitpunkt des Schließens wird die Funktion des Druckbegrenzungsventils 10 instabil. Bei einer Vergrößerung des Spiels zwischen dem Ventilkolben 3 und dem Ventileinsatz 2 würde das Druckbegrenzungsventil 10 beispielsweise schon bei einer Durchflussmenge von etwa 40 1/h schließen. Dies hätte zur Folge, dass bei einer niedrigen Drehzahl einer Brennkraftmaschine mit entsprechend niedrigen Fördermengen keine stabile Einspritzung mehr möglich wäre. Druckbegrenzungsventile mit einem Ventilkolben 3 ohne Flachstellen 3a haben den Nachteil, dass der Druck zu schnell ansteigt.

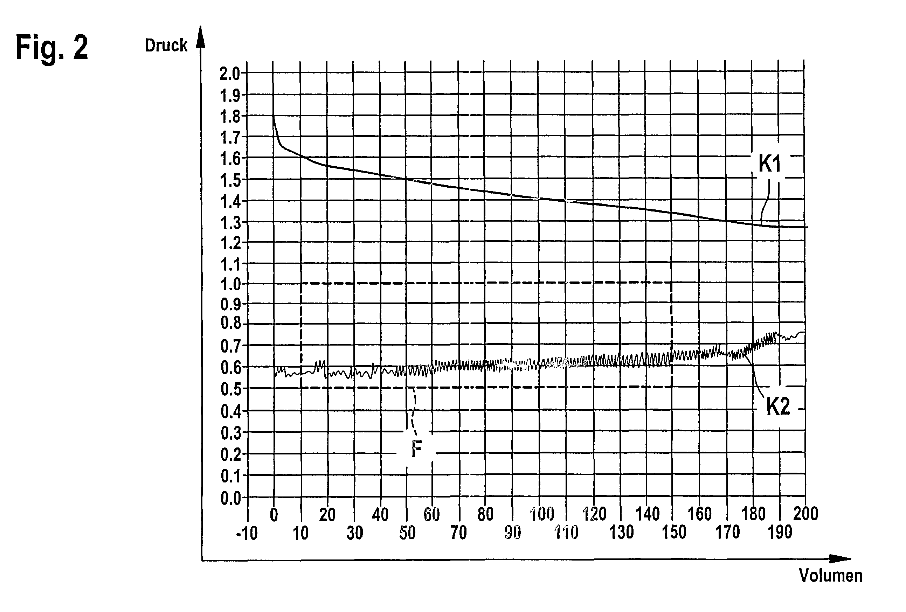

Der Vorteil der erfindungsgemäßen Konstruktion geht auch aus dem in Figur 2 dargestellten Diagramm hervor, das den funktionalen Zusammenhang zwischen Druck und Durchflussmenge zeigt. Auf der X-Achse des in Figur 2 dargestellten rechtwinkligen Koordinatensystems sind Druckwerte in beliebigen Einheiten, auf der Y-Achse Durchflussrate oder Volumenstrom, ebenfalls in beliebigen Einheiten, dargestellt. Die mit K1 bezeichnete Kurve gibt den funktionalen Zusammenhang zwischen den genannten Größen im Normalbetrieb wieder. Die Kurve K2 verdeutlicht den Zusammenhang im Notfahrbetrieb. Die Kurve K2 verdeutlicht anschaulich, dass das erfindungsgemäß ausgestaltete Druckbegrenzungsventil einen zufriedenstellenden Notfahrbetrieb über ein breites Notlauffenster F ermöglicht.

In einem weiteren Ausführungsbeispiel der Erfindung, das in Figur 3 dargestellt ist, sind an dem Außenmantel des Ventilkolbens 3 Flachstellen 3a.1 vorgesehen, die sich, über die gesamte Länge des Ventilkolbens 3 erstrecken. In dem in Figur 1 dargestellten Ausführungsbeispiel erstrecken sich die Flachstellen 3a lediglich über einen Teil der Länge des Ventilkolbens 3.

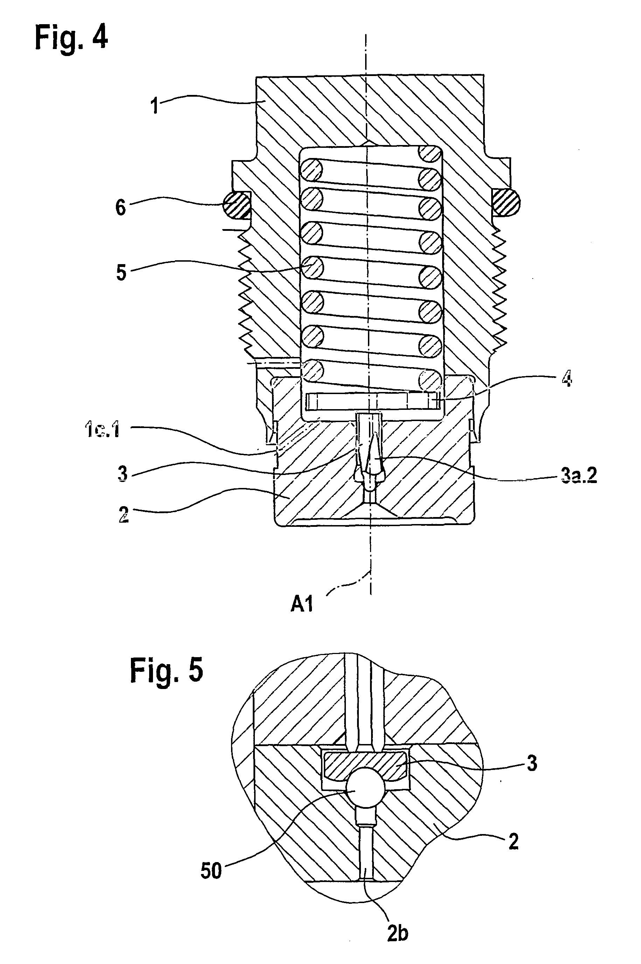

In einem weiteren Ausführungsbeispiel der Erfindung, das in Figur 4 dargestellt ist, sind Flachstellen 3a.2 auf dem Außenmantel des Ventilkolbens 3 vorgesehen, die winklig in Bezug auf die Längsachse des Ventilkolbens 3 ausgerichtet sind. Je nach Stellung des Ventilkolbens 3 ergibt sich somit eine mehr oder weniger große Querschnittsfläche für den Durchtritt von Kraftstoff. Wie Figur 4 ebenfalls zeigt, kann ein Abströmkanal 1c.1 alternativ auch in dem Ventileinsatz 2 angeordnet sein.

Bei einer vorteilhaften weiteren Ausgestaltung der Erfindung übernimmt nicht ein Kolben unmittelbar die Dichtfunktion des Druckbegrenzungsventils 10. Die Ventilöffnung wird vielmehr durch eine Kugel verschlossen, die ihrerseits von einem federbelasteten Kolben beaufschlagt wird. Dies wird anhand von Figur 5 verdeutlicht, die eine vergrößerte Detaildarstellung eines derart ausgestalteten Druckbegrenzungsventils im Querschnitt zeigt. In dem mit Bezugsziffer 2 bezeichneten Ventileinsatz 2 ist eine Kugel 50 in einem Sitz gelagert und verschließt so eine Ventilöffnung 2b. Die Kugel 50 wiederum ist mit einem federbelasteten Ventilkolben 3 beaufschlagt, der die Kugel 50 in ihren Sitz drückt.

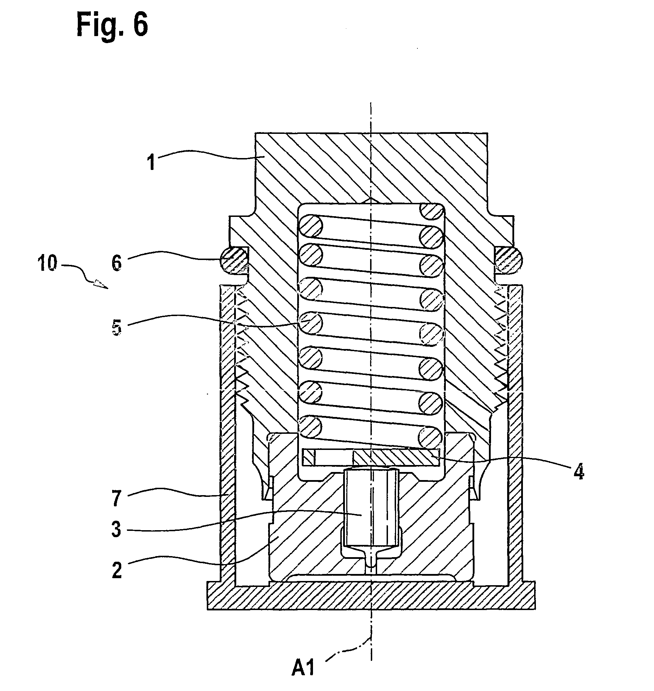

Figur 6 zeigt ein weiteres Ausführungsbeispiel der Erfindung. Hierbei handelt es sich um eine vereinfachte und daher kostengünstigere Variante des schon anhand von Figur 1 beschriebenen Druckbegrenzungsventils. Das in Figur 6 dargestellte Druckbegrenzungsventil 10 umfasst einen in dem Ventileinsatz 2 gleitbar gelagerten Ventilkolben 3. Der Ventilkolben 3 ist im Wesentlichen kreiszylindrisch geformt und verfügt nicht über Flachstellen auf seinem Außenumfang.

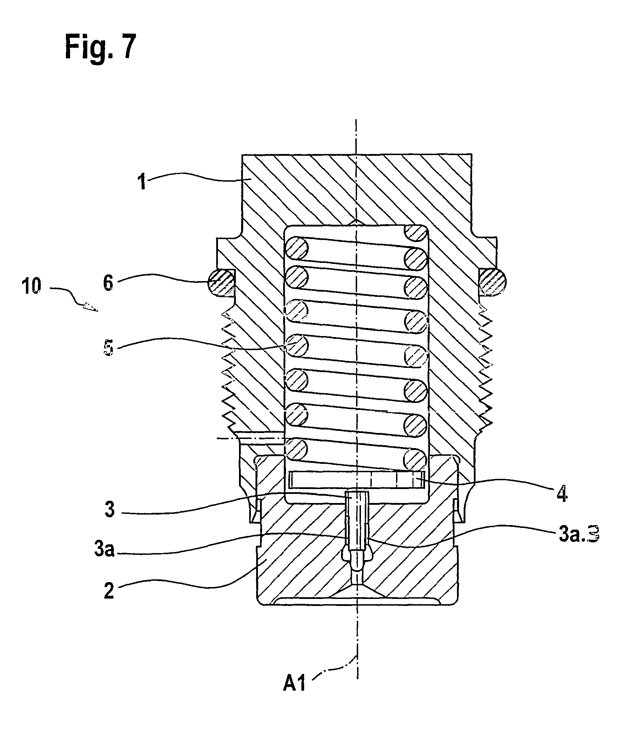

Eine vorteilhafte weitere Ausgestaltung eines Druckbegrenzungsventils ist in Figur 7 dargestellt. Der in dem Ventileinsatz 2 des Druckbegrenzungsventils 10 gleitbar gelagerte Ventilkolben 3 verfügt auf seinem Außenumfang über eine Mehrzahl von Flachstellen 3a, 3a3, deren Steuerkanten einen unterschiedlichen Abstand von der der Druckfeder 5 zugewandten Stirnfläche des Ventilkolben 3 haben. Demzufolge treten die Flachstellen 3a, 3a3 bei Bewegung des Ventilkolbens 3 zu unterschiedlichen Zeitpunkten in Funktion. Diese Ausgestaltung ist sowohl bei parallel zu der Längsachse des Ventilkolbens 3 als auch bei schräg zu der Längsachse des Ventilkolbens 3 ausgerichteten Flachstellen möglich.

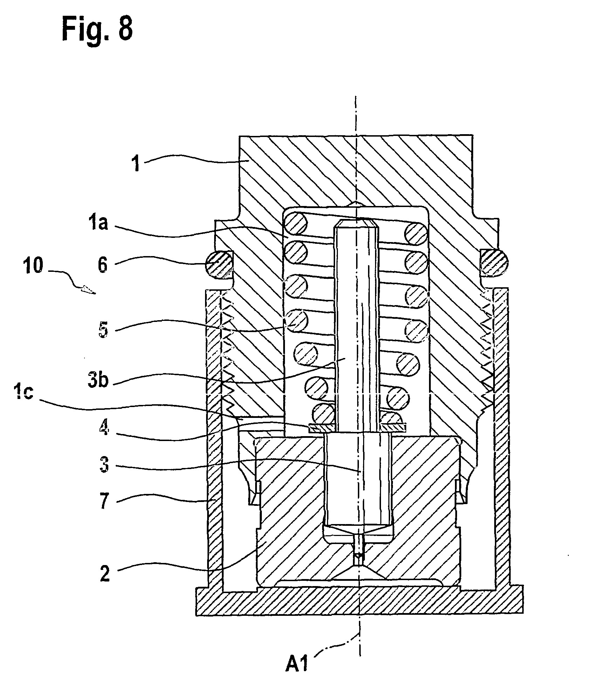

In Figur 8 ist ein weiteres Ausführungsbeispiel eines erfindungsgemäß ausgestalteten Druckbegrenzungsventils 20 dargestellt. Die im Vergleich zu dem Ausführungsbeispiel gemäß Figur 1 noch robustere Konstruktion eines Druckbegrenzungsventils zeigt einen Ventilkolben 3 mit einer Kolbenstange 3b, die, konzentrisch zu der Druckfeder 5 angeordnet, in den Teilraum 1a des Ventilträgers 1 hineinragt. Die Druckfeder 5 ist als Kegelfeder ausgebildet und stützt sich mit ihrer größeren Grundfläche auf dem Topfboden des Ventilträgers 1 ab. Mit ihrer kleineren Grundfläche liegt sie auf einer Einstellscheibe 4 auf, die auf die Kolbenstange 3b des Ventilkolbens 3 aufgeschoben ist und dort auf einer Stufe aufliegt. Dieses Druckbegrenzungsventil ist allerdings für Notfahrbetrieb nicht geeignet.

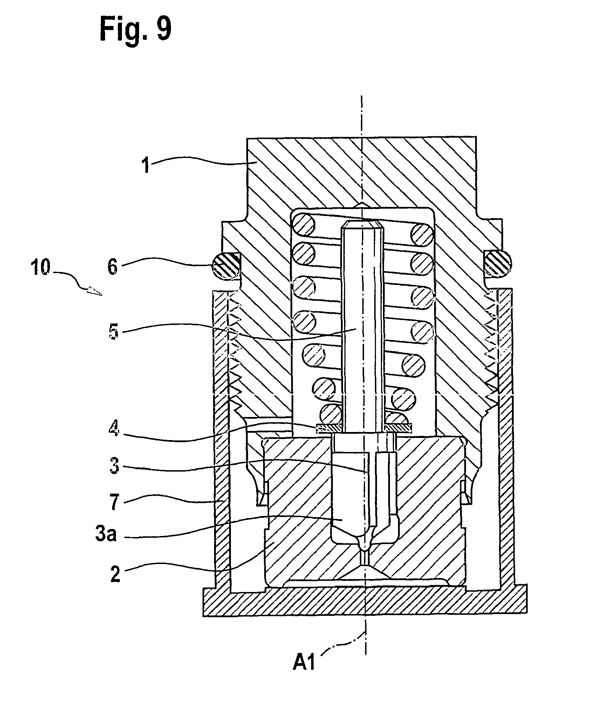

Figur 9 zeigt eine weitere Variante dieses Druckbegrenzungsventils, bei der der Ventilkolben 3 Flachstellen 3a aufweist.

### Bezugszeichenliste

- 1: Ventilträger
- 1a: Teilbereich
- 1b: Teilbereich
- 1c: Abströmkanal
- 2: Ventileinsatz
- 2a: Ausnehmung
- 3: Ventilkolben
- 3a: Flachstelle
- 3a.1: Flachstelle
- 3a.2: Flachstelle
- 3a.3: Flachstelle
- 4: Einstellscheibe
- 4a: Ausnehmung
- 5: Druckfeder
- 6: Dichtring
- 7: Schutzkappe
- 10: Druckbegrenzungsventil
- A: Achse
- A1: Achse
- D1: Durchmesser
- D2: Durchmesser
- K1: Kurve
- K2: Kurve
- 50: Kugel

## Patentansprüche

1. Druckbegrenzungsventil (10) mit einem Ventilträger (1), einem mit dem Ventilträger (1) verbundenen Ventileinsatz (2), einem in dem Ventileinsatz (2) gleitbar gelagerten Ventilkolben (3), sowie mit einer den Ventilkolben (3) mit einer im Schließsinn wirkenden Druckkraft beaufschlagenden Druckfeder (5), und zwischen dem Ventilkolben (3) und der Druckfeder (5) eine Einstellscheibe (4) derart angeordnet ist, dass sich die Druckfeder (5) einerseits an einem Bodenstück des Ventilträgers (1) und andererseits an einer dem Ventilkolben (3) abgewandten Fläche der Einstellscheibe (4) abstützt, **dadurch gekennzeichnet, dass** auf dem Außenumfang des Ventilkolbens (3) mindestens eine Flachstelle (3a, 3a.1, 3a.2, 3a.3) vorgesehen ist.

2. Druckbegrenzungsventil nach Anspruch 1, **dadurch gekennzeichnet, dass** der Ventileinsatz (2) eine topfförmig ausgebildete Ausnehmung (2a) aufweist, in der die Einstellscheibe (4) gleitbar gelagert ist.

3. Druckbegrenzungsventil nach einem der vorhergehenden Ansprüche, **dadurch gekennzeichnet, dass** der Ventilträger (1) topfförmig ausgebildet ist und wenigstens zwei Teilbereiche (1a, 1b) mit jeweils einem unterschiedlichen Innendurchmesser (D1, D2) aufweist, wobei die Teilbereiche (1a, 1b) stufenförmig ineinander übergehen.

4. Druckbegrenzungsventil nach einem der vorhergehenden Ansprüche, **dadurch gekennzeichnet, dass** der erste Teilbereich (1a) des Ventilträgers (1) mit dem geringeren Innendurchmesser (D1) zur Aufnahme der Druckfeder (5) dient und dass der zweite Teilbereich (1b) mit dem größeren Innendurchmesser (D2) den Ventileinsatz (2) von außen umgreift.

5. Druckbegrenzungsventil nach einem der vorhergehenden Ansprüche, **dadurch gekennzeichnet, dass** der Ventilträger (1) und der Ventileinsatz (2) miteinander verstemmt sind.

6. Druckbegrenzungsventil nach einem der vorhergehenden Ansprüche, **dadurch gekennzeichnet, dass** der Ventilträger (1) und der Ventileinsatz (2) miteinander verschraubt sind.

7. Druckbegrenzungsventil nach einem der vorhergehenden Ansprüche, **dadurch gekennzeichnet, dass** der durch die unterschiedlichen Durchmesserbereiche (Durchmesser D1,D2) gebildete stufenförmige Übergang des Ventilträgers (1) auf dem Ventilsitz (2) aufsitzt.

8. Druckbegrenzungsventil nach einem der vorhergehenden Ansprüche, **dadurch gekennzeichnet, dass** auf dem Außenumfang des Ventilkolbens (3) drei Flachstellen (3a, 3a.1, 3a.2, 3a.3) vorgesehen sind, die gleichmäßig auf dem Umfang des Ventilkolbens (3) verteilt angeordnet sind.

9. Druckbegrenzungsventil nach einem der vorhergehenden Ansprüche, **dadurch gekennzeichnet, dass** die Flachstellen (3a) parallel zu der Längsachse des Ventilkolbens (3) verlaufend auf dem Ventilkolben (3) angeordnet sind.

10. Druckbegrenzungsventil nach einem der vorhergehenden Ansprüche, **dadurch gekennzeichnet, dass** die Flachstellen (3, 3a.1, 3a.2, 3a.3) winklig in Bezug auf die Längsachse des Ventilkolbens (3) ausgerichtet sind.

11. Druckbegrenzungsventil nach einem der vorhergehenden Ansprüche, **dadurch gekennzeichnet, dass** die Einstellscheibe (4) eine fluiddurchlässige Ausnehmung (4a) aufweist.

12. Druckbegrenzungsventil nach einem der vorhergehenden Ansprüche, **dadurch gekennzeichnet, dass** die Ausnehmung (4a) exzentrisch angeordnet ist.

13. Druckbegrenzungsventil nach einem der vorhergehenden Ansprüche, **dadurch gekennzeichnet, dass** in dem Ventilträger (1) ein Abströmkanal (1c) vorgesehen ist.

14. Druckbegrenzungsventil nach einem der vorhergehenden Ansprüche, **dadurch gekennzeichnet, dass** der Abströmkanal (1c) als eine das Topfinnere des Ventilträgers (1) mit der Außenmantelfläche des Ventilträgers (1) verbindende Bohrung ausgeführt ist.

15. Druckbegrenzungsventil nach einem der vorhergehenden Ansprüche, **dadurch gekennzeichnet, dass** die Achse (A) der Abströmöffnung winklig in Bezug auf die Längsachse (A1) des Ventilträgers (1) angestellt ist.

16. Druckbegrenzungsventil nach einem der vorhergehenden Ansprüche, **dadurch gekennzeichnet, dass** in dem Ventileissatz (2) ein Abströmkanal (1c) vorgesehen ist.

17. Druckbegrenzungsventil nach einem der vorhergehenden Ansprüche, **dadurch gekennzeichnet, dass** der Ventilkolben (3) eine Kolbenstange (3b) trägt, die in die topfförmige Ausnehmung (Teilraum 1a) des Ventilträgers (1) hineinragt.

18. Druckbegrenzungsventil nach einem der vorhergehenden Ansprüche, **dadurch gekennzeichnet, dass** die Druckfeder (5) als Kegelfeder ausgebildet ist.

19. Druckbegrenzungsventil nach einem der vorhergehenden Ansprüche, **dadurch gekennzeichnet, dass** die Druckfeder (5) die Kolbenstange (3b) des Ventilkolbens (3) konzentrisch umgibt.

20. Druckbegrenzungsventil nach einem der vorhergehenden Ansprüche, **dadurch gekennzeichnet, dass** die Einstellscheibe (4) auf die Kolbenstange (3b) des Ventilkolbens (3) aufgeschoben ist und dort auf einem stufenförmigen Sitz ruht.

## Claims

1. Pressure-limiting valve (10) having a valve support (1), having a valve insert (2) which is connected to the valve support (1), having a valve piston (3) which is mounted such that it can slide in the valve insert (2), and having a pressure spring (5) which exerts a compressive force on the valve piston (3) in the closing direction, and a setting disc (4) being arranged between the valve piston (3) and the pressure spring (5) such that the pressure spring (5) is supported at one side against a base part of the valve support (1) and at the other side against a face, which faces away from the valve piston (3), of the setting disc (4), **characterized in that** at least one flat point (3a, 3a.1, 3a.2, 3a.3) is provided on the outer periphery of the valve piston (3).

2. Pressure-limiting valve according to Claim 1, **characterized in that** the valve insert (2) has a pot-shaped recess (2a) in which the setting disc (4) is mounted such that it can slide.

3. Pressure-limiting valve according to one of the preceding claims, **characterized in that** the valve support (1) is pot-shaped and has at least two partial regions (1a, 1b) each having a different inner diameter (D1, D2), the transition between the partial regions (1a, 1b) being in the form of a step.

4. Pressure-limiting valve according to one of the preceding claims, **characterized in that** the first partial region (1a), with the smaller inner diameter (D1), of the valve support (1) serves to hold the pressure spring (5), and **in that** the second partial region (1b), with the larger inner diameter (D2), engages around the valve insert (2) from the outside.

5. Pressure-limiting valve according to one of the preceding claims, **characterized in that** the valve support (1) and the valve insert (2) are caulked to one another.

6. Pressure-limiting valve according to one of the preceding claims, **characterized in that** the valve support (1) and the valve insert (2) are screwed to one another.

7. Pressure-limiting valve according to one of the preceding claims, **characterized in that** the stepped transition, formed by the different diameter regions (diameters D1, D2), of the valve support (1) is seated on the valve insert (2).

8. Pressure-limiting valve according to one of the preceding claims, **characterized in that** three flat points (3a, 3a.1, 3a.2, 3a.3) are provided on the outer periphery of the valve piston (3), said flat points (3) being arranged so as to be distributed uniformly about the periphery of the valve piston (3).

9. Pressure-limiting valve according to one of the preceding claims, **characterized in that** the flat points (3a) are arranged on the valve piston (3) so as to run parallel to the longitudinal axis of the valve piston (3).

10. Pressure-limiting valve according to one of the preceding claims, **characterized in that** the flat points (3a, 3a.1, 3a.2, 3a.3) are aligned at an angle relative to the longitudinal axis of the valve piston (3).

11. Pressure-limiting valve according to one of the preceding claims, **characterized in that** the setting disc (4) has a recess (4a) which is permeable to fluid.

12. Pressure-limiting valve according to one of the preceding claims, **characterized in that** the recess (4a) is arranged eccentrically.

13. Pressure-limiting valve according to one of the preceding claims, **characterized in that** an outflow duct (1c) is provided in the valve support (1).

14. Pressure-limiting valve according to one of the preceding claims, **characterized in that** the outflow duct (1c) is formed as a bore which connects the pot interior of the valve support (1) to the outer lateral surface of the valve support (1).

15. Pressure-limiting valve according to one of the preceding claims, **characterized in that** the axis (A) of the outflow opening is aligned at an angle relative to the longitudinal axis (A1) of the valve support (1).

16. Pressure-limiting valve according to one of the preceding claims, **characterized in that** an outflow duct (1c.1) is provided in the valve insert (2).

17. Pressure-limiting valve according to one of the preceding claims, **characterized in that** the valve piston (3) supports a piston rod (3b) which projects into the pot-shaped recess (partial space 1a) of the valve support (1).

18. Pressure-limiting valve according to one of the preceding claims, **characterized in that** the pressure spring (5) is embodied as a conical spring.

19. Pressure-limiting valve according to one of the preceding claims, **characterized in that** the pressure spring (5) concentrically surrounds the piston rod (3b) of the valve piston (3).

20. Pressure-limiting valve according to one of the preceding claims, **characterized in that** the setting disc (4) is pushed onto the piston rod (3b) of the valve piston (3) and rests there on a stepped seat.

## Revendications

1. Soupape de limitation de pression (10) comprenant un support de soupape (1), un insert de soupape (2) relié au support de soupape (1), un piston de soupape (3) coulissant dans l'insert de soupape (2) ainsi qu'un ressort de pression (5) sollicitant le piston de soupape (3) avec une force de pression agissant dans le sens de la fermeture, et entre le piston de soupape (3) et le ressort de pression (5) un disque de réglage (4) disposé de sorte que le ressort de pression (5) s'appuie d'une part sur une partie de fond du support de soupape (1) et d'autre part sur une surface du disque de réglage (4) détournée du piston de soupape (3),
**caractérisée en ce que**
la périphérie extérieure du piston de soupape (3) comporte au moins un méplat (3a, 3a.1, 3a.2, 3a.3).

2. Soupape de limitation de pression selon la revendication 1,
**caractérisée en ce que**
l'insert de soupape (2) présente un évidement (2a) en forme de pot dans lequel le disque de réglage (4) peut glisser.

3. Soupape de limitation de pression selon l'une quelconque des revendications précédentes,
**caractérisée en ce que**
le support de soupape (1) présente une forme de pot ainsi qu'au moins deux zones partielles (1a, 1b) ayant chacune un diamètre intérieur (D1, D2) différent, les zones partielles (1a, 1b) passant l'une dans l'autre de façon étagée.

4. Soupape de limitation de pression selon l'une quelconque des revendications précédentes,
**caractérisée en ce que**
la première zone partielle (1a) de plus petit diamètre intérieur (D1) du support de soupape (1) sert à loger le ressort de pression (5), et la deuxième zone partielle (1b) de plus grand diamètre intérieur (D2) entoure l'insert de soupape (2) à l'extérieur.

5. Soupape de limitation de pression selon l'une quelconque des revendications précédentes,
**caractérisée en ce que**
le support de soupape (1) et l'insert de soupape (2) sont emboîtés l'un avec l'autre.

6. Soupape de limitation de pression selon l'une quelconque des revendications précédentes,
**caractérisée en ce que**
le support de soupape (1) et l'insert de soupape (2) sont vissés l'un avec l'autre.

7. Soupape de limitation de pression selon l'une quelconque des revendications précédentes,
**caractérisée en ce que**
le passage étagé du support de soupape (1) formé par les zones de diamètres différents (diamètres D1, D2) est placé sur l'insert de soupape (2).

8. Soupape de limitation de pression selon l'une quelconque des revendications précédentes,
**caractérisée par**
trois méplats (3a, 3a.1, 3a.2, 3a.3) disposés régulièrement sur la périphérie extérieure du piston de soupape (3).

9. Soupape de limitation de pression selon l'une quelconque des revendications précédentes,
**caractérisée en ce que**
les méplats (3a) sur le piston de soupape (3) sont parallèles à l'axe longitudinal du piston de soupape (3).

10. Soupape de limitation de pression selon l'une quelconque des revendications précédentes,
**caractérisée en ce que**
les méplats (3, 3a.1, 3a.2, 3a.3) sont inclinés angulairement par rapport à l'axe longitudinal du piston de soupape (3).

11. Soupape de limitation de pression selon l'une quelconque des revendications précédentes,
**caractérisée en ce que**
le disque de réglage (4) présente un évidement (4a) perméable aux fluides.

12. Soupape de limitation de pression selon l'une quelconque des revendications précédentes,
**caractérisée en ce que**
l'évidement (4a) est excentré.

13. Soupape de limitation de pression selon l'une quelconque des revendications précédentes,
**caractérisée en ce qu'**
un canal d'écoulement (1c) est prévu dans le support de soupape (1).

14. Soupape de limitation de pression selon l'une quelconque des revendications précédentes,
**caractérisée en ce que**
le canal d'écoulement (1c) est un alésage reliant l'intérieur du pot du support de soupape (1) à la surface enveloppe extérieure du support de soupape (1).

15. Soupape de limitation de pression selon l'une quelconque des revendications précédentes,
**caractérisée en ce que**
l'axe (A) de l'ouverture d'écoulement fait un angle par rapport à l'axe longitudinal (A1) du support de soupape (1).

16. Soupape de limitation de pression selon l'une quelconque des revendications précédentes,
**caractérisée par**
un canal d'écoulement (1c) prévu dans l'insert de soupape (2).

17. Soupape de limitation de pression selon l'une quelconque des revendications précédentes,
**caractérisée en ce que**
le piston de soupape (3) porte une tige de soupape (3b) qui fait saillie dans l'évidement en forme de pot (volume partiel 1a) du support de soupape (1).

18. Soupape de limitation de pression selon l'une quelconque des revendications précédentes,
**caractérisée en ce que**
le ressort de pression (5) est un ressort conique.

19. Soupape de limitation de pression selon l'une quelconque des revendications précédentes,
**caractérisée en ce que**
le ressort de pression (5) entoure de façon concentrique la tige de piston (3b) du piston de soupape (3).

20. Soupape de limitation de pression selon l'une quelconque des revendications précédentes,
**caractérisée en ce que**
le disque de réglage (4) est poussé sur la tige de piston (3b) du piston de soupape (3) et y repose sur un insert étagé.
